**Europäisches Patentamt**

(19) **European Patent Office**

**Office européen des brevets**

(11) Veröffentlichungsnummer: **0 192 125**
**B1**

(12) **EUROPÄISCHE PATENTSCHRIFT**

(45) Veröffentlichungstag der Patentschrift:
02.11.88

(21) Anmeldenummer: **86101499.1**

(22) Anmeldetag: **05.02.86**

(51) Int. Cl.⁴: **G 02 B 26/08**

(54) Vorrichtung zur Abtastung eines Gesichtfeldes.

(30) Priorität: **15.02.85 DE 3505198**

(43) Veröffentlichungstag der Anmeldung:
**27.08.86 Patentblatt 86/35**

(45) Bekanntmachung des Hinweises auf die Patenterteilung:
**02.11.88 Patentblatt 88/44**

(84) Benannte Vertragsstaaten:
**DE FR GB**

(56) Entgegenhaltungen:
**GB-A-2 075 789**
**US-A-2 942 514**
**US-A-3 378 687**
**US-A-4 079 230**
**US-A-4 118 109**

(73) Patentinhaber: **Bodenseewerk Gerätetechnik GmbH, Alte Nussdorfer Strasse 15 Postfach 1120, D-7770 Überlingen/Bodensee (DE)**

(72) Erfinder: **Steimel, Johannes, Dr., Zur Schiffslände 20, D-7750 Konstantz 20 (DE)**
Erfinder: **Kordulla, Hans, Hebelweg 16, D-7770 Überlingen (DE)**
Erfinder: **Oppelt, Hans, Lavendelweg 15, D-7770 Überlingen (DE)**

(74) Vertreter: **Weisse, Jürgen, Dipl.- Phys., Patentanwälte Dipl.- Phys. Jürgen Weisse Dipl.- Chem. Dr. Rudolf Wolgast Bökenbusch 41 Postfach 11 03 86, D-5620 Velbert 11 Langenberg (DE)**

LIBER, STOCKHOLM 1988

## Beschreibung

Die Erfindung betrifft eine Vorrichtung zur Abtastung eines Gesichtsfeldes mittels eines Detektors mit einer im wesentlichen reihenförmigen Anordnung von Detektorelementen und einem optischen Abbildungs- und Abtastsystem mit beweglichen optischen Gliedern, durch welches ein Bild des Gesichtsfeldes in der Ebene des Detektors erzeugbar und relativ zu dem Detektor bewegbar ist, zu welchem Zweck das Abbildungs- und Abtastsystem bilddrehende Mittel aufweist, die um eine Drehachse mit einer ersten Drehzahl umlaufen und durch welche das Gesichtsfeldbild mit dem zweifachen dieser ersten Drehzahl verdrehbar ist.

Solche Vorrichtungen sind bekannt durch die US-A-4 393 408 und die GB-A-2 075 789. Es ist bekannt, mit einem Detektor, der aus einer Reihe von Detektorelementen besteht, ein Gesichtsfeld über einen Schwingspiegel abzutasten, wobei das Gesichtsfeldbild quer zur Längsrichtung des Detektors bewegt wird. Die eine Abmessung des abgetasteten Gesichtsfeldes ist dabei begrenzt auf die Länge des Detektors. Die andere Abmessung wird durch die Eigenschaften des Objektivs begrenzt. Es können daher nur relativ kleine Gesichtsfelder auf diese Weise abgetastet werden.

Es ist weiterhin bekannt, mit einem Detektor, der ein einziges Detektorelement aufweist, ein Gesichtsfeld längs einer rosettenförmigen Bahn abzutasten. Das Abbildungsund Abtastsystem enthält dabei erste und zweite bildablenkende Mittel , die mit unterschiedlichen Drehzahlen laufen. Die bildablenkenden Mittel sind dabei meist Spiegel, die geneigt zur Umlaufachse angeordnet sind, oder optisch brechende, umlaufende Keile (US-A-4 039 246, US-A-4 009 393, EP-A-79 684, US-A-4 030 807, US-A-4 413 177 oder geneigt angeordnete Spiegelecken (US-A-3 927 254). Bei einer solchen Rosettenabtastung dauert es relativ lange, bis alle Punkte eines großen Gesichtsfeldes wenigstens einmal von einer Rosettenschleife durchlaufen sind, so daß das Gesichtsfeld mit der erforderlichen Auflösung abgetastet ist.

Die US-A-4 393 408 zeigt einen Detektor, der aus reihenförmig angeordneten Detektorelementen besteht in Verbindung mit bilddrehenden Mitteln. Diese bilddrehenden Mittel sind von einem umlaufenden afokalen System gebildet, das aus zwei zylindrischen optischen Gliedern besteht, welche um eine zur Ebene ihrer Erzeugenden senkrechte Achse umlaufen. Es ist weiterhin ein optisches Glied zum Fokussieren eines Gesichtsfeldbildes in der Ebene des Detektors vorgesehen. Der Durchmesser des so abtastbaren Gesichtsfeldes ist durch die Länge des Detektors bestimmt. Es können somit auch mit dieser bekannten Abtastvorrichtung nur relativ kleine Gesichtsfelder abgetastet werden.

Auch die GB-A-2 075 789 zeigt einen Suchkopf mit einem Detektor, der aus reihenförmig angeordneten Detektorelementen besteht, und einer rotierenden, bilddrehenden Optik. Der Detektor erstreckt sich radial von der Achse der bilddrehenden Optik aus. Die Druckschrift zeigt verschiedene Ausführungen solcher bilddrehender Optiken. Auch hier ist das abtastbare Gesichtsfeld durch die Länge des Detektors bestimmt.

Die gleichen Probleme treten bei einer bekannten Abtastvorrichtung nach der EP-A-130 778 auf, bei welcher ein optisches Abbildungssystem ein stillstehendes Bild eines Gesichtsfeldes in der Ebene eines drehbaren Trägers erzeugt. Der drehbare Träger trägt einen Detektor mit reihenförmig angeordneten Detektorelementen. Das Gesichtsfeldbild wird durch Umlauf des Trägers abgetastet.

Der Erfindung liegt die Aufgabe zugrunde, mittels eines Detektors, der aus reihenförmig angeordneten Detektorelementen besteht, ein im Vergleich zur Fläche des Detektors großes Gesichtsfeld schnell abzutasten.

Erfindungsgemäß wird diese Aufgabe dadurch gelöst, daß

(a) das Abbildungs- und Abtastsystem weiterhin umlaufende, bildablenkende Mittel zur Erzeugung einer Nutationsbewegung des Gesichtsfeldbildes mit einer zweiten Drehzahl aufweist,

(b) der Detektor außerhalb der Drehachse angeordnet ist.

Durch die bilddrehenden Mittel und den außerhalb der Drehachse liegenden Detektor wird bei einem halben Umlauf der bilddrehenden Mittel ein ringförmiger Bereich des Gesichtsfeldes abgetastet. Durch die umlaufenden, bildablenkenden Mittel beschreibt der Mittelpunkt dieses ringförmigen Bereichs gleichzeitig eine Kreisbahn. Nach einem Umlauf der bildablenkenden Mittel wird dabei ein großes Gesichtsfeld mit hoher Auflösung abgetastet.

Ausgestaltungen der Erfindung sind Gegenstand der Unteransprüche.

Zwei Ausführungsbeispiele der Erfindung sind nachstehend unter Bezugnahme auf die zugehörigen Zeichnungen näher erläutert:

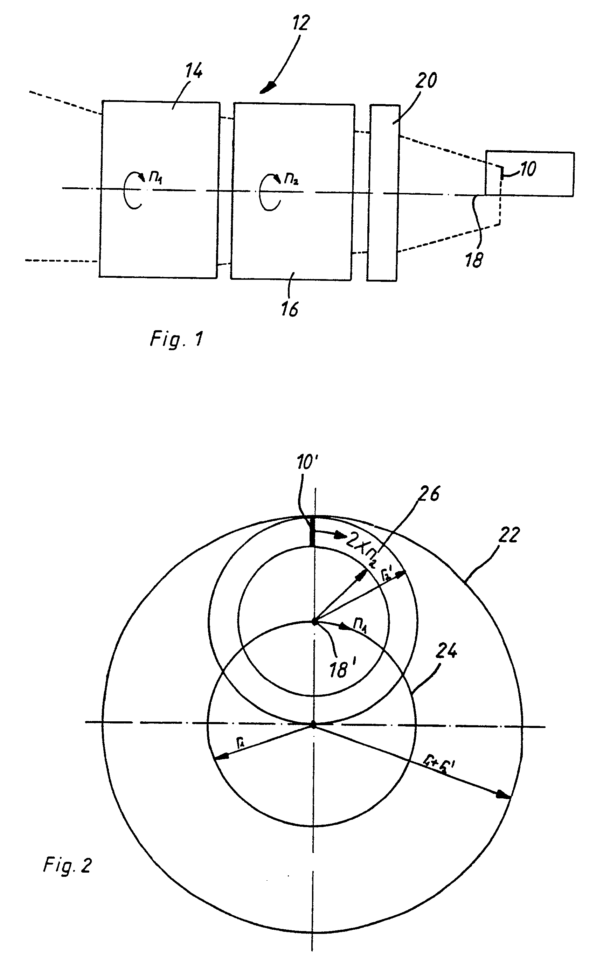

Fig. 1 ist eine Prinzipdarstellung einer Vorrichtung zur Abtastung eines Gesichtsfeldes.

Fig. 2 veranschaulicht die Abtastung des Gesichtsfeldes mittels eines Detektors mit einer im wesentlichen reihenförmigen Anordnung von Detektorelementen.

Fig. 3 zeigt einen Längsschnitt einer ersten Ausführungsform einer Vorrichtung zum Abtasten eines Gesichtsfeldes.

Fig. 4 zeigt einen Längsschnitt einer zweiten Ausführungsform einer solchen Vorrichtung.

Die Vorrichtung zur Abtastung eines Gesichtsfeldes enthält einen Detektor 10 mit einer im wesentlichen reihenförmigen Anordnung von Detektorelementen, der hier einfach als ein Strich dargestellt ist. Solche Detektoren sind an sich bekannt und daher hier nicht im einzelnen beschrieben. In der Ebene des Detektors 10 wird durch ein Abbildungs- und Abtastsystem 12 ein Bild des abzutastenden Gesichtsfeldes erzeugt und relativ zu dem Detektor so bewegt, daß der Detektor nacheinander praktisch alle Punkte des Gesichtsfeldes abtastet. Zu diesem Zweck enthält das Abbildungs- und Abtastsystem 12 bewegliche optische Glieder. Im einzelnen weist das Abbildungs- und Abtastsystem umlaufende bildablenkende Mittel 14 zur Erzeugung einer Nutationsbewegung des Gesichtsfeldbildes mit einer Drehzahl $n_1$ auf. Weiterhin weist das Abbildungs- und Abtastsystem 12 bilddrehende Mittel 16 auf, die um eine Drehachse 18 mit einer Drehzahl- $n_2$ umlaufen. Durch diese bilddrehenden Mittel 16 ist das Gesichtsfeldbild mit dem zweifachen dieser Drehzahl $n_2$ verdrehbar. Das Abbildungs- und Abtastsystem weist schließlich zur Erzeugung eines Bildes des Gesichtsfeldes ein von den bildablenkenden und den bilddrehenden Mitteln 14 bzw. 16 getrenntes optisches Abbildungssystem 20 auf.

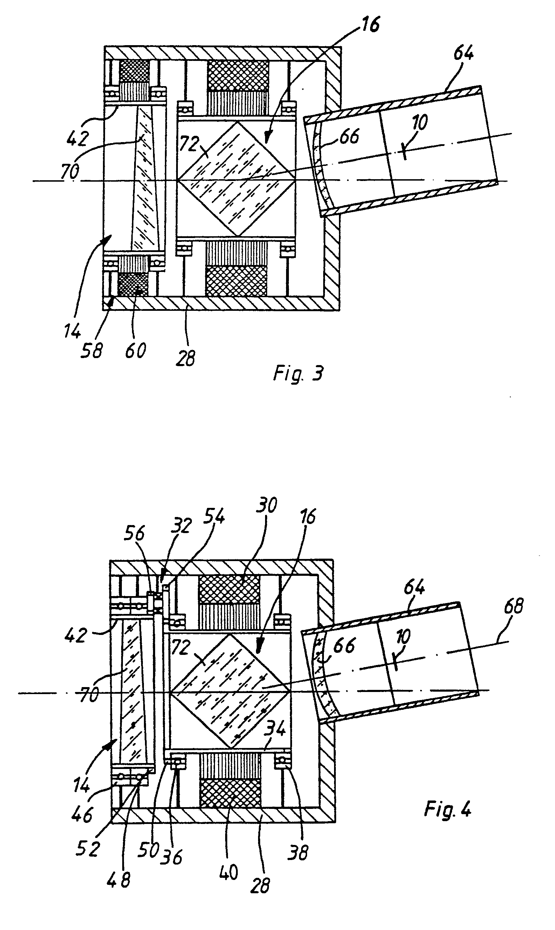

Die Wirkungsweise einer solchen Anordnung ist aus Fig. 2 ersichtlich. Diese veranschaulicht die Abtastung eines kreisrunden Gesichtsfeldes 22 durch eine Vorrichtung der beschriebenen Art. Man kann sich vorstellen, daß in Fig. 2 der Detektor 10 als Detektorbild 10' durch das Abbildungs- und Abtastsystem 12 rückwärts auf das Gesichtsfeld 22 abgebildet ist, wobei sich dieses Detektorbild relativ zu dem Gesichtsfeld bewegt. Die bildablenkenden Mittel 14 bewirken eine Nutationsbewegung des Gesichtsfeldbildes relativ zu dem Detektor 10 oder in Fig. 2 eine Nutationsbewegung eines Bildes 18' der Drehachse 18 längs eines Kreises 24. Entsprechend führt auch das Detektorbild 10' eine Nutationsbewegung aus. Durch die bilddrehenden Mittel erfolgt eine überlagerte Drehung des Gesichtsfeldbildes um die Drehachse 18. In Fig. 2 dreht sich das Detektorbild 10' um das Bild 18' der Drehachse 18. Bei jedem halben Umlauf der bilddrehenden Mittel würde bei Stillstand der bildablenkenden Mittel eine Ringfläche 26 um das Bild 18' der Drehachse 18 durch den Detektor 10 abgetastet. Tatsächlich sind aber die Bilddrehung und die Nutationsbewegung überlagert. Es wird so erreicht, daß z. B. schon bei einem Umlauf der bildablenkenden Mittel 14 und entsprechend mehreren Umläufen der bilddrehenden Mittel 16 das Gesichtsfeld 22 mit hinreichender Auflösung abgetastet ist. Damit das Gesichtsfeld 22 bis zur Mitte hin abgetastet wird, ist in der Bildebene der Radius $r_1$ der durch die bildablenkenden Mittel 14 hervorgerufenen Nutationsbewegung, z. B. des Kreises 24, gleich dem Abstand $r_2$ des radial äußersten Punktes des Detektors 10 von der Drehachse 18. In Fig. 2 sind die Bilder $r_1$, $r_2'$ dieser Radien in der Ebene des Gesichtsfeldes 22 dargestellt.

In den Ausführungsbeispielen von Fig. 3 und Fig. 4 sind die bildablenkenden Mittel 14 und die bilddrehenden Mittel 16 gleichachsig drehbar in einem Gehäuse 28 gelagert. Von den bildablenkenden und den bilddrehenden Mitteln 14 bzw. 16 sind bei der Ausführungsform nach Fig. 4 die einen, nämlich die bilddrehenden Mittel 16, von einem Antriebsmotor 30 antreibbar und die anderen, nämlich die bildablenkenden Mittel 14, mit diesen über ein Getriebe 32 gekoppelt. Die bilddrehenden Mittel 16 sitzen in einer Fassung 34, die über Lager 36, 38 drehbar im Gehäuse 28 gelagert ist. Die Fassung 34 trägt den Rotor des Antriebsmotors 30, dessen Stator 40 im Gehäuse 28 sitzt und die Fassung 34 ringförmig umgibt. Die bildablenkenden Mittel 14 sitzen in einer Fassung 42. Die Fassung 42 ist über Lager 46, 48 drehbar im Gehäuse 28 gelagert. Die bilddrehenden Mittel 16 und die bildablenkenden Mittel 14 weisen an den einander zugewandten Enden je einen Zahnkranz 50 bzw. 52 auf. In dem Gehäuse 28 ist ein Paar von miteinander verbundenen Ritzeln 54 und 56 drehbar gelagert, die mit je einem dieser Zahnkränze 50 bzw. 52 in Eingriff sind.

In Fig. 3 sind für entsprechende Teile die gleichen Bezugszeichen benutzt wie in Fig. 4. Auch hier sitzen die bildablenkenden Mittel 14 in einer Fassung 42, die drehbar im Gehäuse gelagert ist. Die Fassung 42 trägt hier den Rotor eines zweiten Antriebsmotors 58, dessen Stator 60 im Gehäuse 28 sitzt und die Fassung 42 ringförmig umgibt. Die bilddrehenden Mittel 16 werden durch einen Motor 30 angetrieben wie in Fig. 4. Es werden also die bilddrehenden Mittel 16 und die bildablenkenden Mittel 14 von je einem Antriebsmotor 30 bzw. 58 unabhängig voneinander angetrieben.

In beiden Fällen werden die Drehbewegungen der bildablenkenden Mittel 14 und der bilddrehenden Mittel 16 durch (nicht dargestellte) Winkelgeber erfaßt. Aus den beiden Drehwinkeln können für jedes Detektorelement des Detektors 10 die Koordinaten des jeweils erfaßten Gesichtsfeldpunktes ermittelt werden.

Das optische Abbildungssystem enthält einen Tubus 64 mit einem Objektiv 66, dessen optische Achse 68 mit der Drehachse 18 einen Winkel einschließt. Der Tubus 64 ist an dem Gehäuse 28 angebracht.

Die umlaufenden, bildablenkenden Mittel 14 sind von einem optisch brechenden Keil 70 gebildet. Die bilddrehenden Mittel 16 sind von einem doppelten Dove-Prisma 72 gebildet.

Die beschriebenen Anordnungen können in verschiedener Weise abgewandelt werden:

Die bildablenkenden Mittel 14 können so ausgebildet sein, daß sie für sich eine kreisende Bewegung des Gesichtsfeldbildes unter Beibehaltung der Orientierung des Gesichtsfeldbildes im Raum hervorrufen (Nutation). Sie können aber auch eine Kreisbewegung in Verbindung mit einer Drehung hervorrufen. Statt des optisch brechenden Keils oder Prismas 70 kann z. B. auch ein Dove-Prisma oder ein doppeltes Dove-Prisma oder ein geeignetes Spiegelsystem als bildablenkende Mittel verwendet werden. Auch bei den bilddrehenden Mitteln 16 kann das dargestellte doppelte Dove-Prisma durch ein einfaches Dove-Prisma oder durch ein Spiegelsystem ersetzt werden. Statt der Linse 66 als Abbildungssystem kann auch eine Spiegeloptik vorgesehen werden.

Die Reihenfolge der bildablenkenden Mittel (BA), der bilddrehenden Mittel (BD) und des Abbildungssystems (AS) im optischen Strahlengang kann bei entsprechender optischer Auslegung vertauscht werden. Es sind außer der dargestellten folgende Anordnungen möglich.

BD - BA - AS
BA - AS - BD
BD - AS - BA
AS - BA - BD
AS - BD - BA.

Wenn nur ein Ausschnitt des gesamten Gesichtsfeldes ausgewertet werden soll, wird die Bewegung der bildablenkenden Mittel nur in einem begrenzten Winkelbereich ausgeführt.

**Patentansprüche**

1. Vorrichtung zur Abtastung eines Gesichtsfeldes mittels eines Detektors (10) mit einer im wesentlichen reihenförmigen Anordnung von Detektorelementen und einem optischen Abbildungs- und Abtastsystem (12) mit beweglichen optischen Gliedern, durch welches ein Bild des Gesichtsfelds in der Ebene des Detektors (10) erzeugbar und relativ zu dem Detektor (10) bewegbar ist, zu welchem Zweck das Abbildungs- und Abtastsystem (12) bilddrehende Mittel (16) aufweist, die um eine Drehachse (18) mit einer ersten Drehzahl ($n_2$) umlaufen und durch welche das Gesichtsfeldbild mit dem zweifachen dieser ersten Drehzahl verdrehbar ist,

dadurch gekennzeichnet, daß

(a) das Abbildungs- und Abtastsystem (12) weitere umlaufende, bildablenkende Mittel (14) zur Erzeugung einer Nutationsbewegung des Gesichtsfeldbildes mit einer zweiten Drehzahl ($n_1$) aufweist und

(b) der Detektor (10) außerhalb der Drehachse (18) angeordnet ist.

2. Vorrichtung nach Anspruch 1, dadurch gekennzeichnet, daß das Abbildungs- und Abtastsystem (12) zur Erzeugung eines Bildes des Gesichtsfeldes ein von den bilddrehenden und bildablenkenden Mitteln (16, 14) getrenntes optisches Abbildungssystem (20) aufweist.

3. Vorrichtung nach Anspruch 1, dadurch gekennzeichnet, daß in der Bildebene der Radius ($r_1$) der durch die bildablenkenden Mittel (14) hervorgerufenen Nutationsbewegung gleich dem Abstand ($r_2$) des radial äußersten Punktes des Detektors (10) von der Drehachse (18) ist.

4. Vorrichtung nach Anspruch 1, dadurch gekennzeichnet, daß die bilddrehenden und die bildablenkenden Mittel (16, 14) gleichachsig drehbar in einem Gehäuse (28) gelagert sind.

5. Vorrichtung nach Anspruch 4, dadurch gekennzeichnet, daß von den bilddrehenden und den bildablenkenden Mitteln (16, 14) die einen von einem Antriebsmotor (30) antreibbar und die anderen mit diesen über ein Getriebe (32) gekoppelt sind.

6. Vorrichtung nach Anspruch 4, dadurch gekennzeichnet, daß die bilddrehenden Mittel (16) und die bildablenkenden Mittel (14) von je einem Antriebsmotor (30, 58) unabhängig voneinander antreibbar sind.

7. Vorrichtung nach einem der Ansprüche 5 oder 6, dadurch gekennzeichnet, daß

(a) die bilddrehenden Mittel (16) in einer Fassung (34) sitzen, die drehbar in dem Gehäuse (28) gelagert ist und

(b) die Fassung (34) den Rotor eines Antriebsmotors (30) trägt, dessen Stator (40) im Gehäuse (28) sitzt und die Fassung ringförmig umgibt.

8. Vorrichtung nach den Ansprüchen 5 und 7, dadurch gekennzeichnet, daß

(a) die bildablenkenden Mittel (14) in einer Fassung (42) sitzen, die drehbar in dem Gehäuse (28) gelagert ist,

(b) die Fassungen (34, 42) der bilddrehenden und der bildablenkenden Mittel (16, 14) an den einander zugewandten Enden je einen Zahnkranz (50, 52) aufweisen und

(c) in dem Gehäuse ein Paar von miteinander verbundenen Ritzeln (54, 56) drehbar gelagert ist, die mit je einem dieser Zahnkränze (50, 52) in Eingriff sind.

9. Vorrichtung nach den Ansprüchen 6 und 7, dadurch gekennzeichnet, daß

(a) die bildablenkenden Mittel (14) in einer Fassung (42) sitzen, die drehbar in dem Gehäuse (28) gelagert ist, und

(b) die Fassung (42) den Rotor eines zweiten Antriebsmotors (58) trägt, dessen Stator (60) im Gehäuse (28) sitzt und die Fassung (42) ringförmig umgibt.

10. Vorrichtung nach Anspruch 4, dadurch gekennzeichnet, daß die umlaufenden bildablenkenden Mittel (14) von einem optisch brechenden Keil (70) gebildet sind.

11. Vorrichtung nach Anspruch 4, dadurch gekennzeichnet, daß die bilddrehenden Mittel (16) von einem umlaufenden Dove-Prisma (72) gebildet sind.

**Claims**

1. Device for scanning a field of view by means of a detector (10) having a substantially linear array of detector elements and an imaging and scanning optical system (12) having movable optical elements, said optical system being adapted to form an image of the field of view in the plane of the detector (10) and to move said image relative to the detector (10), to which end said imaging and scanning optical system (12) comprises image rotating means (16) which rotate about an axis of rotation (18) at a first

rotary speed (n$_2$) and which are adapted to rotate the image of the field of view at twice this first rotary speed,

characterized in that

a) the imaging and scanning optical system (12) comprises further rotating, image deflecting means (14) for generating a nutating movement of the image of the field of view at a second rotary speed (n$_1$), and

b) said detector (10) is arranged eccentric to said axis of rotation (18).

2. Device as claimed in claim 1, characterized in that said imaging and scanning optical system (12) in addition to said image rotating means (16) and said image deflecting means (14) comprises a separate imaging optical system (20) for forming an image of the field of view.

3. Device as claimed in claim 1, characterized in that, in the image plane, the radius (r$_1$) of the nutating movement caused by said image deflecting means (14) is equal to the distance (r$_2$) of the radially outermost point of said detector (10) from said axis of rotation (18).

4. Device as claimed in claim 1, characterized in that said image rotating means (16) and said image deflecting means (14) are mounted in a housing (28) for rotation about a common axis.

5. Device as claimed in claim 4, characterized in that one of said image rotating and image deflecting means (16, 14) is arranged to be driven by a driving motor (30), and the other one of said means is coupled with said one means through a transmission (32).

6. Device as claimed in claim 4, characterized in that said image rotating means (16) and said image deflecting means (14) are arranged to be driven independently of each other by a driving motor (30, 58) each.

7. Device as claimed in anyone of the claims 5 or 6, characterized in that

a) said image rotating means (16) are held in a mount (34) which is rotatably mounted in said housing (28), and

b) said mount (34) carries the rotor of a driving motor (30), the stator (40) of which is supported in said housing (28) and annularly surrounds said mount.

8. Device as claimed in the claims 5 and 7, characterized in that

a) said image deflecting means (14) are held in a mount (42) which is rotatably mounted in said housing (28),

b) said mounts (34, 42) of said image rotating means and of said image deflecting means (16, 14) each have a gear ring (50, 52) at their ends facing each other, and

c) a pair of interconnected pinions (54, 56) is rotatably mounted in said housing, which pinions mesh with one of these gear rings (50, 52) each.

9. Device as claimed in the claims 6 and 7, characterized in that

a) said image deflecting means (14) are held in a mount (42) which is rotatably mounted in said housing (28), and

b) said mount (42) carries the rotor of a second driving motor (58) the stator (60) of which is supported in said housing (28) and annularly surrounds said mount (42).

10. Device as claimed in claim 4, characterized in that the rotating image deflecting means (14) is an optically refracting wedge (70).

11. Device as claimed in claim 4, characterized in that the image rotating means (16) is a rotating Dove prism (72).

**Revendications**

1. Dispositif déstiné à balayer un champs de vision au moyen d'un détecteur (10) ayant une disposition d'éléments de détecteur essentiellement en file et un système de reproduction et de balayage optique (12) ayant des membres optiques mobiles par lesquels un image du champs de vision peut être produit dans le plan du détecteur (10) et par lesquels cet image est déplacable relativement au détecteur (10), à quelle fin le système de reproduction et de balayage (12) présente des moyens tournant l'image (16), qui sont rotatifs autour d'un axe de rotation (18) à un premier nombre de tours (n$_2$) et par quels moyens l'image du champs de vision est rotatif au double de ce premier nombre de tours,

caractérisé par le fait que

(a) le système de reproduction et de balayage (12) présente d'autres moyens rotatifs déviant l'image (14) déstinés à engendrer un mouvement de nutation de l'image du champs de vision à un deuxième nombre de tours (n$_1$), et

(b) le détecteur (10) est disposé au dehors de l'axe de rotation (18).

2. Dispositif selon la revendication 1, caractérisé par le fait que le système de reproduction et de balayage (12) présente un système de reproduction optique (20) séparé des moyens tournant l'image (16) et des moyens déviant l'image (14) et déstiné à produire un image du champs de vision.

3. Dispositif selon la revendication 1, caractérisé par le fait que dans le plan de l'image le rayon (r$_1$) du mouvement de nutation provoqué par les moyens déviant l'image (14) est égal à l'écart (r$_2$) entre le point radialement le plus extrême du détecteur (10) et l'axe de rotation (18).

4. Dispositif selon la revendication 1, caractérisé par le fait que les moyens tournant l'image (16) et les moyens déviant l'image (14) sont montés dans un boîtier (28) de sorte à être rotatifs autour du même axe.

5. Dispositif selon la revendication 4, caractérisé par le fait que des moyens tournant l'image (16) et des moyens déviant l'image (14) les uns peuvent être entraînés par un moteur de commande (30) et les autres sont couplés à ceux-ci par un engrenage (32).

6. Dispositif selon la revendication 4, caractérisé par le fait que les moyens tournant l'image (16) et les moyens déviant l'image (14) peuvent être entraînés par un servomoteur (30, 58) indépendament les uns des autres.

7. Dispositif selon l'une des revendications 5 ou 6, caractérisé par le fait que

(a) les moyens tournant l'image (16) sont situés dans un châssis (34) monté rotativement dans le boîtier (28), et

(b) le châssis (34) porte le rotor d'un moteur de commande (30) dont le stator (40) est situé dans le boîtier (28) et entoure le châssis angulairement.

8. Dispositif selon les revendications 5 et 7, caractérisé par le fait que

(a) les moyens déviant l'image (14) sont situés dans un châssis (42) monté rotativement dans le boîtier (28),

(b) les châssis (34, 42) des moyens tournant l'image (16) et des moyens déviant l'image (14) présentent chacun une couronne dentée (50, 52) aux extrémités en face, et

(c) une paire de pignons (54, 56) reliés est montée dans le boîtier, quels pignons sont en engrenage avec l'une des couronnes dentées (50, 52) chacun.

9. Dispositif selon les revendications 6 et 7, caractérisé par le fait que

(a) les moyens déviant l'image (14) sont situés dans un châssis (42) monté rotativement dans le boîtier (28), et

(b) le châssis (42) porte le rotor d'un deuxième moteur de commande (58) dont le stator (60) est situé dans le boîtier (28) et entoure le châssis (42) angulairement.

10. Dispositif selon la revendication 4, caractérisé par le fait que les moyens rotatifs déviant l'image (14) sont formés par un coin réfractif (70).

11. Dispositif selon la revendication 4, caractérisé par le fait que les moyens tournant l'image (16) sont formés par un prisme Dove rotatif (72).

Fig. 1

Fig. 2

Fig. 3

Fig. 4